# FASCICULE DE BREVET EUROPEEN

(11) **EP 3 246 943 B1**
(45) Date de publication et mention de la délivrance du brevet: **16.02.2022**
(21) Numéro de dépôt: 17171958.6
(22) Date de dépôt: 19.05.2017
(51) Int. Cl.: H01L 23/544, H03K 19/003

(54) **DISPOSITIF ELECTRONIQUE A IDENTIFICATION DE TYPE PUF**
ELEKTRONISCHE VORRICHTUNG MIT PUF-BASIERTER IDENTIFIZIERUNG
ELECTRONIC DEVICE HAVING PUF-TYPE IDENTIFICATION

(30) Priorité: 20.05.2016 FR 1654544
(43) Date de publication de la demande: 22.11.2017
(73) Titulaire: Commissariat à l'énergie atomique et aux énergies alternatives, 75015 Paris (FR)
(72) Inventeur: WACQUEZ, Romain, ALBANY, NY 12203 (US); FOURNIER, Jacques, 13109 SIMIANE-COLLONGUE (FR); REITA, Carlo, 38120 SAINT EGREVE (FR)
(74) Mandataire: Brevalex

(56) Documents cités:
- WO-A1-00/49538
- US-A1- 2004 124 524
- US-A1- 2005 275 001
- US-A1- 2012 326 752
- RATHNAMALA RAO ET AL: "Study of Random Dopant Fluctuation Effects in FD-SOI MOSFET Using Analytical Threshold Voltage Model", IEEE TRANSACTIONS ON DEVICE AND MATERIALS RELIABILITY, IEEE SERVICE CENTER, PISCATAWAY, NJ, US, vol. 10, no. 2, 1 juin 2010 (2010-06-01), pages 247-253, XP011348024, ISSN: 1530-4388, DOI: 10.1109/TDMR.2010.2044180
- SEBASTIEN BRIAIS ET AL: "Random Active Shield", FAULT DIAGNOSIS AND TOLERANCE IN CRYPTOGRAPHY (FDTC), 2012 WORKSHOP ON, IEEE, 9 septembre 2012 (2012-09-09), pages 103-113, XP032240361, DOI: 10.1109/FDTC.2012.11 ISBN: 978-1-4673-2900-2

## Description

### DOMAINE TECHNIQUE ET ART ANTÉRIEUR

L'invention concerne le domaine de la sécurité et de l'identification de dispositifs électroniques tels que des puces électroniques et/ou des circuits intégrés électroniques, utilisés notamment dans des systèmes embarqués ou des objets connectés (loT, ou « Internet of Things »).

Une approche appelée PUF (« Physically Unclonable Function ») permettant d'identifier ou d'authentifier de manière sécurisée et unique un circuit ou une puce électronique consiste à identifier des caractéristiques uniques et propres à ce circuit pour identifier ce circuit, de manière analogue à des empreintes digitales d'une personne. Idéalement, ces caractéristiques doivent être stables dans le temps (contre le vieillissement), stables vis-à-vis des variations liées aux conditions de mesure (courant, tension et conditions extérieures/environnementales de mesure telles que la température), et être impossible à dupliquer matériellement ou mathématiquement (c'est-à-dire via la création d'un modèle mathématique capable de remplacer les éléments matériels comprenant les caractéristiques uniques). Toute manipulation ou modification du circuit ou de la puce doit également engendrer une modification de ces caractéristiques afin que la lecture de cet identifiant puisse garantir l'intégrité du circuit ou de la puce. Ainsi, une manipulation malveillante du circuit ou de la puce ne doit pas permettre la duplication de cette fonction PUF, ni une altération des résultats de cette fonction (sans détruire la puce dans son intégralité).

Une première solution pour permettre une telle identification consiste à intégrer au circuit des composants électroniques aptes à générer un délai variable et strictement différent de circuit à circuit en conséquence des variations des procédés de fabrication intra plaque, intra lot et lot à lot. La valeur de ce délai correspond à l'identifiant unique. Ces composants électroniques forment par exemple un ou plusieurs oscillateurs en anneaux dédiés à cette identification.

Les inconvénients de cette première solution sont que le délai mesuré est instable, notamment en température, et que ces composants électroniques peuvent être modélisés mathématiquement grâce à des méthodes par apprentissage.

Une deuxième solution pour réaliser une telle identification consiste à utiliser des éléments mémoires (cellules SRAM) du circuit et à considérer que les états mémoires dans lesquels ces éléments mémoires s'initialisent (états de métastabilité) forment ensemble l'identifiant du circuit. Une telle solution est par exemple décrite dans le document D.E. Holcomb et al., « Power-Up SRAM State as an Identifying Fingerprint and Source of True Random Numbers », IEEE Transactions on Computers, vol. 58, n°9, septembre 2009.

Cette solution a toutefois pour inconvénient que les éléments mémoires utilisés pour générer l'identifiant sont sensibles aux variations de courant, de tension et de température auxquelles ces éléments mémoires sont soumis, ainsi qu'aux variations liées au vieillissement du circuit. De plus, cette solution nécessite la mise en œuvre d'importants codes de correction d'erreurs et d'algorithmes de post-traitement qui sont coûteux à mettre en œuvreet qui engendrent également des problèmes de sécurité du fait qu'ils rendent vulnérable cette solution vis-à-vis d'attaques logicielles (le post-traitement pouvant être attaqué par des attaques physiques telles que l'espionnage de canaux auxiliaires ou l'injection de fautes, pour retrouver de manière invasive la valeur PUF mesurée.

En outre, dans de tels éléments mémoires, il existe une corrélation entre les états métastables d'une ligne de cellules mémoires alimentées par une même ligne d'alimentation électrique. L'identifiant généré présente donc une certaine prédictibilité qui n'est pas souhaitée pour un identifiant de type PUF. Enfin, il existe également des attaques invasives permettant de cloner ces cellules mémoires, comme cela est décrit dans le document « Cloning Physically Unclonable Functions » de C. Helfmeier et al., Hardware-Oriented Security and Trust (HOST), 2013 IEEE International Symposium on, 2-3 juin 2013, pages 1-6.

Le document US 2005/275001 A1 divulgue un dispositif électronique comportant une pluralité de transistors MOSFET de même design et un circuit d'identification apte à déterminer un identifiant unique de type PUF du dispositif électronique à partir d'au moins une caractéristique électrique intrinsèque de chacun des transistors MOSFET dont la valeur dépend au moins en partie de la conductance dudit transistor. Pendant une étape d'implantation d'atomes de dopage dans les canaux des transistors MOSFET des moyens pour augmenter les variations paramétriques aléatoires sont appliqués.

### EXPOSÉ DE L'INVENTION

Un but de la présente invention est de proposer un dispositif électronique pouvant être identifié, ou authentifié, via une identification, ou une authentification, de type PUF et qui ne présente pas les inconvénients précédemment décrits, c'est-à-dire permettant une identification par l'intermédiaire d'un identifiant stable dans le temps et stable vis-à-vis des variations de tension, courant et température auxquelles le dispositif électronique est susceptible d'être soumis, qui ne soit pas prédictible, qui réduise le besoin en codes de correction d'erreurs et qui réduise les risques de sécurité face aux attaques physiques et aux modélisations.

Pour cela, l'invention propose un dispositif électronique selon la revendication 1.

Dans les premiers transistors, un très léger dopage est donc ajouté intentionnellement dans les canaux de ces transistors, ce dopage étant de type N pour des transistors NMOS et de type P pour des transistors PMOS. La concentration de ces dopants ajoutés peut être de l'ordre de 1.10¹⁸ at/cm³ ou comprise entre environ 5.10¹⁷ at/cm³ et 8.10¹⁸ at/cm³.

En réalisant un dopage des canaux des premiers transistors (qui sont ceux destinés à être utilisés pour générer l'identifiant du dispositif) de type identique au type de porteurs présents dans les zones de source et de drain de chacun de ces premiers transistors, le mismatch, ou non-appariement (correspondant aux différences, ou variations, locales d'un transistor à l'autre), augmente. Cette augmentation du mismatch, ou du non-appariement, des transistors permet donc de réaliser une bonne différentiation des caractéristiques électriques entre les transistors qui sont utilisés pour la détermination de l'identifiant unique. Ainsi, l'identification réalisée est beaucoup plus stable vis-à-vis des différentes variations possibles sur les tensions, courants et températures auxquelles le dispositif électronique est susceptible d'être soumis.

Cette augmentation de la stabilité de l'identification permet donc de réduire fortement le besoin en codes de correction d'erreurs si le dispositif fait appel à de tels codes.

En outre, la prédictibilité de l'identifiant est fortement réduite car lorsque les premiers transistors forment des cellules mémoires qui, avec leurs états à l'initialisation (c'est-à-dire lors de la mise en alimentation des cellules mémoires), définissent l'identifiant du dispositif, l'augmentation du mismatch des transistors utilisés pour l'identification entraîne une dé-corrélation plus importante entre les états métastables des cellules mémoires.

De plus, grâce à cette augmentation du non-appariement, ou mismatch, entre les transistors, l'identification peut être réalisée en utilisant des caractéristiques électriques des transistors autres que celles des états mémoires initiaux de cellules mémoires, par exemple des valeurs de courants circulants dans ces transistors.

Selon le niveau de dopage des canaux des premiers transistors, la dose de non-appariement (mismatch) peut être contrôlée.

Enfin, par rapport à l'art antérieur, cette solution réduit les risques de sécurité face aux attaques physiques car du fait que le dispositif électronique est réalisé sur substrat SOI (transistors MOSFET de type FDSOI) la présence du diélectrique enterré (BOX) à l'interface inférieure des transistors va rendre plus complexe l'observation de l'émission photonique du circuit et donc son clonage.

Les risques face aux modélisations sont également réduits car la caractéristique électrique de chaque transistor est déterminée par l'implantation d'une dose faible de dopants dans le canal. La concentration en dopants dans le canal ne permet alors pas un recouvrement des orbitales atomiques, et la distribution en dopants est alors discrétisée. Cette situation résulte directement d'un procédé purement stochastique, à savoir l'implantation ionique.

Lorsque ces dopants ajoutés dans les canaux de premiers transistors sont de type N (premiers transistors de type NMOS), ces dopants peuvent être du phosphore et/ou de l'arsenic. Lorsque ces dopants ajoutés dans des canaux de premiers transistors sont de type P (premiers transistors de type PMOS), ces dopants peuvent être du bore et/ou du BF₂.

Les transistors de ladite pluralité de transistors MOSFET sont de type FD-SOI.

Les transistors FD-SOI correspondent à des transistors MOS réalisés sur un substrat de type semi-conducteur sur isolant tel qu'un substrat de type silicium sur isolant, et qui sont complètement désertés ou complètement déplétés (FD pour « Fully-Depleted »).

Dans un transistor FD-SOI classique, le canal est dit « intrinsèque », c'est-à-dire qu'aucun dopant n'est rajouté dans le canal, ni pour un transistor de type P, ni pour un transistor de type N. Il existe cependant un dopage résiduel, appelé également dopage intrinsèque, très faible, se trouvant naturellement dans le semi-conducteur du substrat utilisé pour leur réalisation et qui n'impacte pas électriquement le fonctionnement du transistor FD-SOI. Ce dopage résiduel est le plus souvent de type P et est par exemple compris entre environ 1.10¹⁵ at/cm³ et 1.10¹⁶ at/cm³ (ce qui correspond à une quantité de dopants négligeable car par exemple, le volume typique du canal d'un transistor FD-SOI réalisé en technologie 28 nm est d'environ 3,2.10⁻¹⁷ cm³, soit entre environ 0,032 et 0,32 « dopant unique » dans un canal).

Ainsi, lorsque la concentration des dopants ajoutés dans les canaux des premiers transistors est par exemple de l'ordre de 1.10¹⁸ at/cm³, ce niveau de dopage est environ 100 à 1000 fois supérieur à celui présent naturellement dans le canal d'un transistor PMOS, c'est-à-dire environ 100 à 1000 fois supérieur à la concentration intrinsèque de dopants dans le substrat. Dans le cas d'un transistor NMOS, ces dopants peuvent être de type opposé à ceux présents naturellement dans le canal de ce transistor, et se distinguent donc de ces dopants qui ont des effets opposés (donneurs d'électrons et accepteurs d'électrons).

De tels transistors FD-SOI présentent de nombreux avantages électriques comparativement aux transistors CMOS classiques, et ont intrinsèquement un mismatch, ou non-appariement, meilleur. Autrement dit, deux transistors FD-SOI de même design présentent peu de différences, ou variations, locales d'un transistor à l'autre. Toutefois, en réalisant un dopage des canaux des transistors FD-SOI destinés à être utilisés pour générer l'identifiant du dispositif, ce mismatch augmente fortement permettant donc de réaliser une bonne différentiation des caractéristiques électriques entre les transistors FD-SOI qui sont utilisés pour la détermination de l'identifiant unique.

Ainsi, le caractère unique de l'identifiant déterminé par le circuit d'identification n'est pas dû aux variations propres au procédé de réalisation mis en œuvrepour réaliser les transistors, mais à la variabilité apportée en dopant les canaux des transistors FD-SOI comme indiqué ci-dessus.

Enfin, l'utilisation de transistors FD-SOI est également avantageuse car de tels transistors sont moins sensibles aux attaques depuis la face arrière du substrat sur lequel ces transistors sont réalisés.

Ce dispositif électronique peut avantageusement être réalisé en technologie FDSOI 28 nm ou moins, par exemple 14 nm. La longueur de grille des premiers transistors du dispositif électronique est ici inférieure ou égale à 20 nm afin d'obtenir des comportements électriques des transistors conduisant bien au mismatch.

La distance séparant le ou les dopants dits « isolés » présents dans le canal, c'est-à-dire du même type que ceux présents dans les source et drain, vis-à-vis de la couche diélectrique enterrée, ou BOX, présente sous les canaux des transistors FD-SOI est la source d'aléa spécifique au dispositif selon l'invention. En effet, la proximité de la couche diélectrique enterrée avec ces dopants modifie l'énergie d'ionisation des dopants (principe de la charge image). Il existe alors une infinité de possibilité pour l'énergie d'ionisation d'un dopant isolé dans un transistor FD-SOI, alors qu'en technologie bulk, l'énergie d'ionisation est la valeur nominale correspondant à un dopant isolé dans un espace homogène à l'infini.

Dans le dispositif selon l'invention, la singularité de chaque premier transistor est directement liée à la conjonction de l'architecture du transistor FD-SOI (présence de la couche diélectrique enterrée sous le canal) avec le fait que la grille du transistor ait une longueur inférieure ou égale à 20 nm et que des dopants de type identiques à ceux présents dans les source et drain du transistor soient présents dans le canal.

Dans un premier mode de réalisation, le circuit d'identification peut être apte à comparer deux à deux les valeurs de courants circulant dans les premiers transistors polarisés de manière identique, les résultats de ces comparaisons pouvant être destinés à former l'identifiant unique du dispositif électronique. En effet, étant donné que le dopage du canal modifie la conductance d'un transistor, qui elle-même varie en fonction du potentiel V_{G} appliqué sur la grille du transistor, les différences entre les courants des premiers transistors polarisés de manière identique sont des données particulièrement pertinentes pour former l'identifiant du dispositif électronique.

Les courants lus par le circuit d'identification peuvent correspondre aux courants I_{ON} des premiers transistors, c'est-à-dire au courant circulant entre le drain et la source du transistor lorsque V_{GS} (tension grille-source) = V_{DS} (tension drain-source) = Valim (tension d'alimentation du transistor).

En variante, les comparaisons réalisées pour obtenir l'identifiant peuvent être réalisées non pas directement sur les valeurs des courants drain-source des transistors, mais sur des caractéristiques électriques différentes pouvant être obtenues à partir de ces courants, par exemple en comparant les tensions de seuil des premiers transistors dont les valeurs peuvent être obtenues à partir de celles des courants circulant dans les transistors (par exemple par dichotomie en mesurant le courant I_{ON} pour différentes valeurs de la tension V_{G} appliquée sur la grille du transistor).

Dans ce cas, le circuit d'identification peut comporter au moins :
- un multiplexeur comportant plusieurs entrées chacune reliée au drain ou à la source d'un des premiers transistors, et deux sorties ; et
- un comparateur comportant deux entrées reliées aux deux sorties du multiplexeur, et apte à délivrer en sortie un signal dont la valeur dépend du résultat de la comparaison entre les valeurs des courants appliqués sur les entrées du comparateur.

Ainsi, les différentes combinaisons possibles de deux transistors parmi l'ensemble des premiers transistors permettent l'obtention d'un nombre important de résultats de comparaison formant l'identifiant unique du dispositif électronique.

Selon un deuxième mode de réalisation, le dispositif électronique peut être tel que :
- les premiers transistors forment plusieurs cellules mémoires SRAM, et
- le circuit d'identification est apte à lire un état mémoire initial de chacune des cellules mémoires SRAM formées par les premiers transistors, les états mémoires initiaux desdites cellules mémoires SRAM formant ensemble l'identifiant unique du dispositif électronique.

Dans ce deuxième mode de réalisation, du fait de l'augmentation du mismatch entre les transistors qui engendre une augmentation de la stabilité des états initiaux des cellules mémoires, les codes de correction d'erreurs nécessaires sont alors très fortement réduits.

Ladite concentration de dopants du même type que ceux présents dans les source et drain dudit premier transistor peut être comprise entre environ 5.10¹⁷ et 8.10¹⁸ at/cm³, et par exemple de l'ordre de 1.10¹⁸ at/cm³.

La grille de chacun des premiers transistors peut avoir une longueur inférieure à celle de la grille de chacun des autres transistors, ici inférieure ou égale à 20 nm. De tels premiers transistors sont avantageux car l'augmentation du mismatch obtenue est particulièrement importante dans ce cas.

Chacun des premiers transistors peut avoir une zone active d'épaisseur supérieure à celle de la zone active de chacun des autres transistors, par exemple supérieure ou égale à environ 10 nm pour des transistors FD-SOI. De tels premiers transistors sont avantageux car l'augmentation du mismatch obtenue est particulièrement importante dans ce cas. En outre, pour assurer une proximité des dopants du canal avec la couche diélectrique enterrée, l'épaisseur de la zone active de chacun des premiers transistors peut être comprise entre 5 nm et 20 nm.

L'invention porte également sur un procédé de réalisation selon la revendication 9.

L'ajout de ces dopants dans les canaux des premiers transistors impacte peu les autres étapes mises en œuvrepour la réalisation du dispositif électronique et est donc compatible avec les procédés existants.

La réalisation des premiers transistors peut comporter la mise en œuvre d'une implantation de dopants dans le semi-conducteur destiné à former les zones actives de chacun des premiers transistors, avec une dose comprise entre environ 5.10¹¹ et 5.10¹² at/cm² et une énergie comprise entre environ 0,5 et 20 keV, et avantageusement entre environ 2 et 3 keV voire entre environ 2 keV et 10 keV (10 keV dans le cas de dopants phosphore). L'énergie avec laquelle les dopants sont implantés peut être adaptée en fonction des espèces implantées et de la présence ou non d'une couche protectrice présente sur les canaux, l'épaisseur de cette couche protectrice pouvant être supérieure à environ 10 nm.

L'invention porte également sur un procédé d'identification d'un dispositif électronique selon la revendication 11.

L'invention porte également sur un procédé d'identification d'un dispositif électronique selon la revendication 12.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente une partie d'un dispositif électronique, objet de la présente invention, selon un premier mode de réalisation ;
- les figures 2A à 2D représentent des étapes de réalisation d'un transistor servant à réaliser une identification au sein d'un dispositif électronique, objet de la présente invention, selon un exemple de réalisation ;
- la figure 3 représente schématiquement un dispositif électronique, objet de la présente invention, selon un deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

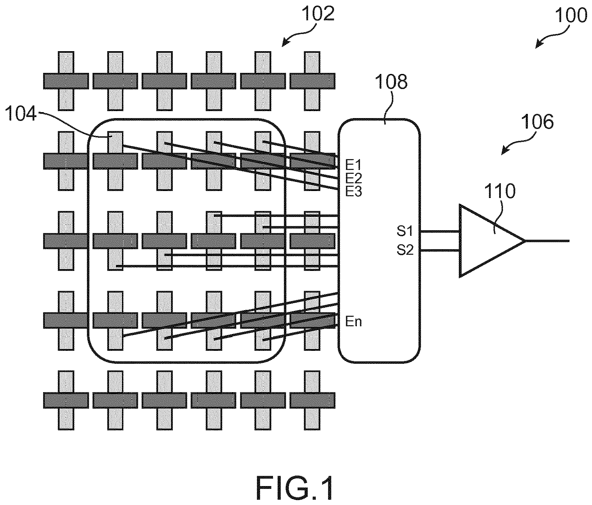

On se réfère à la figure 1 qui représente une partie d'un dispositif électronique 100 selon un premier mode de réalisation.

Le dispositif électronique 100 correspond à une puce électronique ou un circuit intégré réalisé à partir d'un substrat de type semi-conducteur sur isolant, par exemple SOI (silicium sur isolant).

Le dispositif électronique 100 comporte de nombreux transistors 102 MOSFET complètement désertés, ici de type FD-SOI (« Fully-Depleted Silicon On Insulator »), c'est-à-dire comportant un canal formé dans une couche de semi-conducteur très mince disposée sur un diélectrique enterré.

Une partie des transistors 102 du dispositif électronique 100, appelés premiers transistors 104, sont destinés à servir à l'identification du dispositif électronique 100. Ces premiers transistors 104 comportent chacun un canal dans lequel une concentration de dopants du même type que ceux présents dans les source et drain dudit premier transistor 104 est supérieure à celle dans le canal des chacun des autres transistors 102.

Le dispositif électronique 100 comporte également un circuit d'identification 106 permettant de déterminer un identifiant unique du dispositif électronique 100.

Le circuit d'identification 106 comporte un multiplexeur 108 muni de plusieurs entrées, ici n entrées référencées E1 - En, chacune reliée au drain ou à la source d'un des premiers transistors 104. Le multiplexeur 108 comporte également deux sorties S1 et S2 sur lesquelles les courants circulant dans deux des premiers transistors 104 sont aptes à être délivrés.

Les courants circulant entre le drain et la source des premiers transistors 104 sont lus en polarisant ces premiers transistors 104 de manière identique. Par exemple, les courants lus peuvent correspondre aux courants I_{ON} des premiers transistors 104, c'est-à-dire le courant circulant entre le drain et la source du transistor lorsque V_{GS} (tension grille-source) = V_{DS} (tension drain-source) = Valim (tension d'alimentation du transistor). En variante, les courants des premiers transistors 104 peuvent être lus en polarisant les premiers transistors 104 avec des tensions de valeurs différentes de celle de Valim.

Le circuit d'identification 106 comporte également un comparateur 110 comportant deux entrées reliées aux deux sorties du multiplexeur 108, et apte à délivrer en sortie un signal dont la valeur est fonction du résultat de la comparaison entre les valeurs des courants reçus en entrée par le comparateur 110. Sur l'exemple de la figure 1, le comparateur correspond à un amplificateur différentiel. Selon que la valeur du courant appliqué sur une première des deux entrées du comparateur 110 est supérieure ou inférieure à celle du courant appliqué sur une deuxième des deux entrées du comparateur 110, la tension délivrée en sortie par le comparateur 110 peut être assimilée à un signal binaire ayant une valeur égale à la tension d'alimentation du comparateur 110 assimilée à un '1' binaire, ou une valeur nulle assimilée à '0' binaire.

Grâce au multiplexeur 108 et au comparateur 110, le circuit d'identification 106 compare ainsi deux à deux les valeurs des courants circulant dans les premiers transistors 104 qui sont polarisés de manière identique. Les différentes valeurs délivrées par le comparateur 110 pour ces différentes comparaisons forment ensemble un nombre binaire correspondant à l'identifiant unique du dispositif électronique 100.

Sur l'exemple de la figure 1, le circuit d'identification 106 est apte à réaliser les comparaisons de courants I_{ON} de douze premiers transistors 104, permettant donc la réalisation de 66 comparaisons de courants. L'identifiant peut donc correspondre à un nombre binaire pouvant avoir jusqu'à 66 bits lorsque le circuit d'identification 106 est capable de déceler une différence stable entre toutes les paires de courants mesurés. En cas d'erreurs, des éléments de post-traitement peuvent corriger ces erreurs pour s'en affranchir.

Sur l'exemple de la figure 1, les premiers transistors 104 sont choisis parmi les transistors 102 tels qu'ils ne soient pas localisés au niveau des bords du dispositif 100. Cela permet de ne considérer que les variations dites locales (et donc liées à des phénomènes stochastiques, purement aléatoires) car tous les premiers transistors 104 sont bien identiques vis-à-vis des procédés de fabrication mis en œuvre. Les « effets de bord » pouvant influer sur les caractéristiques des transistors sont dans ce cas supprimés. Cela permet également de réaliser une authentification fondée sur un mécanisme de « défi réponse » ou « challenge response » qui permet d'authentifier le dispositif électronique de manière sécurisée.

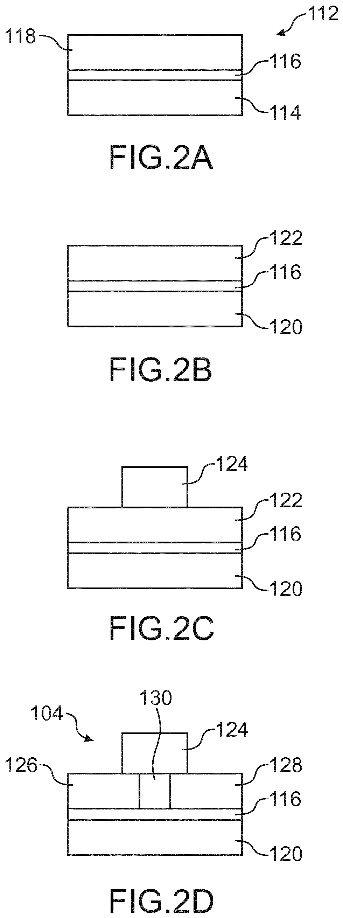

Un exemple de réalisation d'un des premiers transistors 104 de type FDSOI est décrit en liaison avec les figures 2A à 2D. Seules les étapes principales de la réalisation de ce transistor 104 sont décrites ci-dessous.

Les premiers transistors 104 sont réalisés à partir d'un substrat SOI 112 comportant une couche épaisse de semi-conducteur 114, comprenant par exemple du silicium, formant le support mécanique du substrat 112 (figure 2A). Le substrat SOI 112 comporte également une couche diélectrique enterrée 116, comprenant par exemple du SiO₂, disposée sur la couche épaisse 114. Le substrat SOI 112 comporte également une couche mince 118 de semi-conducteur disposée sur la couche diélectrique enterrée 116 et destinée à servir à la réalisation des zones actives des transistors 102. L'épaisseur de la couche mince 118 est par exemple comprise entre environ 7 nm et 8 nm, ou plus généralement inférieure à 20 nm ou comprise entre 5 nm et 20 nm, et celle de la couche diélectrique enterrée 116 est par exemple d'environ 25 nm. Le caractère FD-SOI des premiers transistors 104 est obtenu notamment grâce à cette très faible épaisseur de la couche mince 118. Cette faible épaisseur de la couche mince 118 va également permettre d'assurer une proximité entre la couche diélectrique enterrée 116 et les dopants qui seront implantés dans le canal.

Comme représenté sur la figure 2B, un dopage de la couche épaisse 114 est mis en œuvreafin de former les puits N ou P 120 des premiers transistors 104. Les puits N ou P des autres transistors 102 sont également formés au cours de cette étape.

Un très faible dopage de parties 122 de la couche mince 118 destinées à former les zones actives des premiers transistors 104 est ensuite réalisé. Ce dopage est ici obtenu par implantation de dopants à très faible dose, par exemple comprise entre environ 5.10¹¹ et 5.10¹² at/cm², avec une faible énergie, par exemple comprise entre environ 0,5 et 20 keV, et avantageusement entre environ 2 et 10 keV ou égale à environ 10 keV. Ainsi, les concentrations de dopants obtenues dans ces parties 122 de la couche mince 118 sont par exemple comprises entre environ 5.10¹⁷ et 8.10¹⁸ at/cm³.

Les premiers transistors 104 peuvent être de type NMOS et/ou PMOS (NMOS et PMOS lorsqu'une partie de ces premiers transistors 104 sont de type NMOS et que les autres premiers transistors 104 sont de type PMOS). Les dopants implantés dans les canaux des premiers transistors 104 sont du même type de conductivité que ces transistors 104. Ainsi, pour un transistor NMOS, les dopants implantés sont par exemple des espèces dopantes d'As et/ou de P. Pour un transistor PMOS, les dopants implantés sont par exemple des espèces dopantes de B et/ou de BF₂.

Une grille 124 est ensuite réalisée pour chacun des premiers transistors 104 sur les parties 122 (figure 2C). Les grilles des autres transistors 102 sont également réalisées au cours de cette étape.

Les source 126 et drain 128 des premiers transistors 104 sont ensuite formés par dopage (ainsi que les source et drain des autres transistors 102), avec des niveaux de dopage bien plus importants que celui utilisé précédemment pour doper les canaux 130 des premiers transistors 104, autour des canaux 130 faiblement dopés des premiers transistors 104 (figure 2D).

Les premiers transistors 104 ainsi réalisés se distinguent des autres transistors 102 du dispositif 100 de par leur canal faiblement dopé, les canaux des autres transistors 102 n'étant pas dopés (hormis un dopage intrinsèque de type P par exemple compris entre environ 1.10¹⁵ at/cm³ et 1.10¹⁶ at/cm³).

De manière avantageuse, la longueur de grille des premiers transistors 104 peut être inférieure à celle des autres transistors 102 du dispositif 100 (qui est par exemple de 22 nm). La longueur effective du canal qui est obtenue est également inférieure à 20 nm. Cela permet d'augmenter le mismatch entre les transistors. En effet, les dopants rajoutés dans le canal servent de puits de potentiel pour les charges libres (le courant électronique), et c'est ce courant circulant à travers ce puits de potentiel qui augmente le mismatch. Avec une faible longueur de grille, le couplage de ce courant avec les zones de source et drain est amélioré.

En outre, il est possible que les parties 122 de la couche mince 118 destinées à former les zones actives des premiers transistors 104 aient une épaisseur supérieure à celle des parties de la couche mince 118 destinées à former les zones actives des autres transistors 102 du dispositif 100. Par exemple, l'épaisseur des zones actives des autres transistors 102 peut être comprise entre environ 7 nm et 8 nm, et celle des zones actives des premiers transistors 104 peut être supérieure ou égale à environ 10 nm, ou comprise entre environ 10 nm et 20 nm. Cela permet d'augmenter l'énergie d'ionisation des dopants présents dans les canaux des premiers transistors 104, et donc d'accroitre le mismatch entre les transistors.

En variante du premier mode de réalisation précédemment décrit, il est possible que le circuit de détection 106 ne réalise pas une comparaison des valeurs des courants circulant dans les premiers transistors 104, mais une comparaison de valeurs d'une ou plusieurs autres caractéristiques électriques des premiers transistors 104, par exemple la tension de seuil V_{T} des premiers transistors 104. Dans ce cas, le circuit de détection 106 comporte un élément de calcul supplémentaire interposé entre le multiplexeur 108 et le comparateur 110, relié aux sorties S1 et S2 du multiplexeur 108 et au entrées du comparateur 110. Cet élément de calcul supplémentaire délivre sur ses sorties les valeurs des caractéristiques électriques souhaitées, par exemple celles des tensions de seuil des transistors 104, calculées à partir des valeurs des courants délivrés en sortie du multiplexeur 108. Par exemple, la tension de seuil d'un premier transistor 104 peut être calculée par dichotomie en mesurant le courant I_{ON} pour différentes valeurs de la tension V_{G} appliquée sur la grille de ce premier transistor 104.

Les comparaisons des valeurs des courants circulant dans les premiers transistors 104 peuvent également être réalisées à différentes polarisations de drain et de grille des premiers transistors 104.

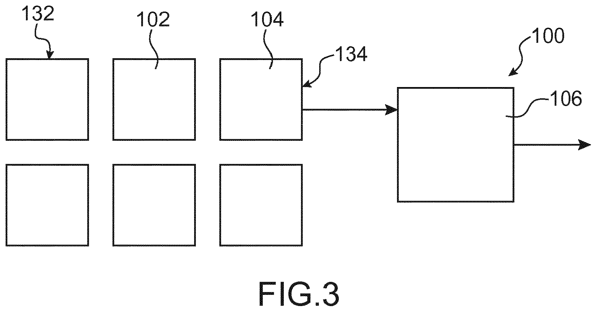

Selon un deuxième mode de réalisation représenté schématiquement sur la figure 3, le dispositif électronique 100 comporte des cellules mémoires SRAM 132 formées à partir des transistors 102 MOSFET de type FD-SOI. Parmi ces cellules mémoires SRAM 132, certaines sont destinées à servir à l'identification du dispositif électronique 100. Sur le schéma de la figure 3, ces cellules mémoires SRAM sont référencées 134. Ces cellules mémoires SRAM 134 sont formées par les premiers transistors 104 qui comportent un canal dopé.

Les états mémoires initiaux de ces cellules SRAM 134 sont lus par le circuit de détection 106, ces états mémoires initiaux formant l'identifiant unique du dispositif électronique 100.

Le circuit de détection 106 comporte par exemple des éléments fonctionnant de manière analogue à ceux décrits dans le document de R. Maes et al. « A Soft Decision Helper Data Algorithm for SRAM PUFs », Information Theory, 2009. ISIT 2009. IEEE International Symposium on, pp. 2101 - 2105. Dans ce cas, le post-traitement de l'information et le code correcteur d'erreur est implémenté de manière conforme à un PUF à base de SRAM.

Dans l'invention précédemment décrite, le dispositif électronique 100 comporte des transistors 102 de type FD-SOI.

## Revendications

1. Dispositif électronique (100) comportant au moins :
- une pluralité de transistors (102) MOSFET de type FD-SOI, parmi lesquels des premiers transistors (104) de même design sont tels que chaque premier transistor (104) comporte un canal (130) d'épaisseur inférieure à 20 nm et dans lequel une concentration de dopants du même type que ceux présents dans les source et drain dudit premier transistor (104) est supérieure à celle dans le canal de chacun des autres transistors de ladite pluralité de transistors (102) du même type de conductivité que ledit premier transistor (104) ; et
- un circuit d'identification (106) apte à déterminer un identifiant unique de type PUF du dispositif électronique (100) à partir d'au moins une caractéristique électrique intrinsèque de chacun des premiers transistors (104) dont la valeur dépend au moins en partie de la conductance dudit premier transistor (104) ;
et dans lequel une grille (124) de chacun des premiers transistors (104) a une longueur inférieure ou égale à 20 nm.

2. Dispositif électronique (100) selon la revendication 1, dans lequel le circuit d'identification (106) est apte à comparer deux à deux les valeurs de courants circulant dans les premiers transistors (104) polarisés de manière identique, les résultats de ces comparaisons étant destinés à former l'identifiant unique du dispositif électronique (100).

3. Dispositif électronique (100) selon la revendication 2, dans lequel le circuit d'identification (106) comporte au moins :
- un multiplexeur (108) comportant plusieurs entrées chacune reliée au drain ou à la source d'un des premiers transistors (104), et deux sorties ; et
- un comparateur (110) comportant deux entrées reliées aux deux sorties du multiplexeur (108), et apte à délivrer en sortie un signal dont la valeur dépend du résultat de la comparaison entre les valeurs des courants appliqués sur les entrées du comparateur (110).

4. Dispositif électronique (100) selon la revendication 1, dans lequel :
- les premiers transistors (104) forment plusieurs cellules mémoires SRAM (134), et
- le circuit d'identification (106) est apte à lire un état mémoire initial de chacune des cellules mémoires SRAM (134) formées par les premiers transistors (104), les états mémoires initiaux desdites cellules mémoires SRAM (134) formant ensemble l'identifiant unique du dispositif électronique (100).

5. Dispositif électronique (100) selon l'une des revendications précédentes, dans lequel ladite concentration de dopants du même type que ceux présents dans les source et drain dudit premier transistor (104) est comprise entre environ 5.10¹⁷ et 8.10¹⁸ at/cm³.

6. Dispositif électronique (100) selon l'une des revendications précédentes, dans lequel la grille (124) de chacun des premiers transistors (104) a une longueur inférieure à celle de la grille de chacun des autres transistors (102).

7. Dispositif électronique (100) selon l'une des revendications précédentes, dans lequel chacun des premiers transistors (104) a une zone active (122) d'épaisseur supérieure à celle de la zone active de chacun des autres transistors (102).

8. Dispositif électronique (100) selon la revendication 7, dans lequel ladite zone active (122) de chacun des premiers transistors (104) a une épaisseur comprise entre 5 nm et 20 nm.

9. Procédé de réalisation d'un dispositif électronique (100), comportant au moins les étapes de :
- réalisation d'une pluralité de transistors (102) MOSFET de type FDSOI, parmi lesquels des premiers transistors (104) de même design sont tels que chaque premier transistor (104) comporte un canal (130) d'épaisseur inférieure à 20 nm et dans lequel une concentration de dopants du même type que ceux présents dans les source et drain dudit premier transistor (104) est supérieure à celle dans le canal de chacun des autres transistors de ladite pluralité de transistors (102) du même type de conductivité que ledit premier transistor (104), les canaux des premiers transistors (104) ayant subis une même étape de dopage, et tels qu'une grille (124) de chacun des premiers transistors (104) ait une longueur inférieure ou égale à 20 nm ;
- réalisation d'un circuit d'identification (106) apte à déterminer un identifiant unique de type PUF du dispositif électronique (100) à partir d'au moins une caractéristique électrique intrinsèque de chacun des premiers transistors (104) dont la valeur dépend au moins en partie de la conductance dudit premier transistor (104).

10. Procédé selon la revendication 9, dans lequel la réalisation des premiers transistors (104) comporte la mise en œuvred'une implantation de dopants dans le semi-conducteur (118) destiné à former les zones actives (122) de chacun des premiers transistors (104), avec une dose comprise entre environ 5.10¹¹ et 5.10¹² at/cm² et une énergie comprise entre environ 0,5 et 20 keV.

11. Procédé d'identification d'un dispositif électronique (100) comportant une pluralité de transistors (102) MOSFET de type FD-SOI, parmi lesquels des premiers transistors (104) de même design sont tels que chaque premier transistor (104) comporte un canal (130) d'épaisseur inférieure à 20 nm et dans lequel une concentration de dopants du même type que ceux présents dans les source et drain dudit premier transistor (104) est supérieure à celle dans le canal de chacun des autres transistors de ladite pluralité de transistors (102) du même type de conductivité que ledit premier transistor (104), et tels qu'une grille (124) de chacun des premiers transistors (104) ait une longueur inférieure ou égale à 20 nm, comprenant au moins les étapes de :
- lecture de courants circulant dans les premiers transistors polarisés de manière identique ;
- comparaison deux à deux des valeurs desdits courants, les résultats de ces comparaisons formant un identifiant unique de type PUF du dispositif électronique.

12. Procédé d'identification d'un dispositif électronique (100) comportant une pluralité de transistors (102) MOSFET de type FD-SOI, parmi lesquels des premiers transistors (104) de même design sont tels que chaque premier transistor (104) comporte un canal (130) d'épaisseur inférieure à 20 nm et dans lequel une concentration de dopants du même type que ceux présents dans les source et drain dudit premier transistor (104) est supérieure à celle dans le canal de chacun des autres transistors de ladite pluralité de transistors (102) du même type de conductivité que ledit premier transistor (104), et tels qu'une grille (124) de chacun des premiers transistors (104) ait une longueur inférieure ou égale à 20 nm, les premiers transistors (104) formant plusieurs cellules mémoires SRAM (134),
comprenant au moins une étape de lecture d'un état mémoire initial de chacune des cellules mémoires SRAM (134) formées par les premiers transistors (104), les états mémoires initiaux desdites cellules mémoires SRAM (134) formant ensemble un identifiant unique de type PUF du dispositif électronique (100).

## Patentansprüche

1. Elektronische Vorrichtung (100), umfassend wenigstens:
- eine Vielzahl von MOSFET-Transistoren (102) vom Typ FD-SOI, von denen erste Transistoren (104) desselben Designs derart beschaffen sind, dass jeder erste Transistor (104) einen Kanal (130) mit einer Dicke von weniger als 20 nm aufweist und wobei eine Konzentration von Dotierstoffen desselben Typs wie die in Source und Drain des ersten Transistors (104) vorhandenen höher ist als die im Kanal jedes der anderen Transistoren der Vielzahl von Transistoren (102) desselben Leitfähigkeitstyps wie der erste Transistor (104); und
- eine Identifikationsschaltung (106), die dazu geeignet ist, eine eindeutige Kennung vom Typ PUF der elektronischen Vorrichtung (100) aus wenigstens einer inhärenten elektrischen Eigenschaft jedes der ersten Transistoren (104) zu bestimmen, deren Wert wenigstens teilweise von der Leitfähigkeit des ersten Transistors (104) abhängt;
und wobei ein Gate (124) jedes der ersten Transistoren (104) eine Länge von kleiner gleich 20 nm aufweist.

2. Elektronische Vorrichtung (100) nach Anspruch 1, wobei die Identifikationsschaltung (106) dazu geeignet ist, die Werte der in den identisch polarisierten ersten Transistoren (104) fließenden Ströme paarweise zu vergleichen, wobei die Ergebnisse dieser Vergleiche dazu bestimmt sind, die eindeutige Kennung der elektronischen Vorrichtung (100) zu bilden.

3. Elektronische Vorrichtung (100) nach Anspruch 2, wobei die Identifikationsschaltung (106) wenigstens umfasst:
- einen Multiplexer (108), umfassend mehrere Eingänge, die jeweils mit Drain oder Source eines der ersten Transistoren (104) verbunden sind, sowie zwei Ausgänge; und
- einen Komparator (110), umfassend zwei Eingänge, die mit den beiden Ausgängen des Multiplexers (108) verbunden sind, und der dazu geeignet ist, am Ausgang ein Signal zu liefern, dessen Wert vom Ergebnis des Vergleichs zwischen den Werten der an die Eingänge des Komparators (110) angelegten Ströme abhängt.

4. Elektronische Vorrichtung (100) nach Anspruch 1, wobei:
- die ersten Transistoren (104) mehrere SRAM-Speicherzellen (134) bilden, und
- die Identifikationsschaltung (106) dazu geeignet ist, einen Anfangsspeicherzustand jeder der von den ersten Transistoren (104) gebildeten SRAM-Speicherzellen (134) auszulesen, wobei die Anfangsspeicherzustände der SRAM-Speicherzellen (134) zusammen die eindeutige Kennung der elektronischen Vorrichtung (100) bilden.

5. Elektronische Vorrichtung (100) nach einem der vorhergehenden Ansprüche, wobei die Konzentration von Dotierstoffen desselben Typs, wie die in Source und Drain des ersten Transistors (104) vorhandenen, zwischen etwa 5.10¹⁷ und 8.10¹⁸ at/cm³ liegt.

6. Elektronische Vorrichtung (100) nach einem der vorhergehenden Ansprüche, wobei das Gate (124) jedes der ersten Transistoren (104) eine geringere Länge aufweist als das Gate jedes der anderen Transistoren (102).

7. Elektronische Vorrichtung (100) nach einem der vorhergehenden Ansprüche, wobei jeder der ersten Transistoren (104) einen aktiven Bereich (122) aufweist, mit einer größeren Dicke als derjenigen des aktiven Bereichs jedes der anderen Transistoren (102).

8. Elektronische Vorrichtung (100) nach Anspruch 7, wobei der aktive Bereich (122) jedes der ersten Transistoren (104) eine Dicke zwischen 5 nm und 20 nm aufweist.

9. Verfahren zur Herstellung einer elektronischen Vorrichtung (100), das wenigstens die folgenden Schritte umfasst:
- Herstellung einer Vielzahl von MOSFET-Transistoren (102) vom Typ FD SOI, von denen erste Transistoren (104) desselben Designs derart beschaffen sind, dass jeder erste Transistor (104) einen Kanal (130) mit einer Dicke von weniger als 20 nm aufweist und wobei eine Konzentration von Dotierstoffen desselben Typs wie die in Source und Drain des ersten Transistors (104) vorhandenen höher ist als die in dem Kanal jedes der anderen Transistoren der Vielzahl von Transistoren (102) desselben Leitfähigkeitstyps wie der erste Transistor (104), wobei die Kanäle der ersten Transistoren (104) denselben Dotierungsschritt durchlaufen haben und derart, dass ein Gate (124) jedes der ersten Transistoren (104) eine Länge von kleiner gleich 20 nm aufweist;
- Realisierung einer Identifikationsschaltung (106), die dazu geeignet ist, eine eindeutige Kennung vom Typ PUF der elektronischen Vorrichtung (100) aus wenigstens einer inhärenten elektrischen Eigenschaft jedes der ersten Transistoren (104) zu bestimmen, deren Wert wenigstens teilweise von der Leitfähigkeit des ersten Transistors (104) abhängt.

10. Verfahren nach Anspruch 9, wobei die Herstellung der ersten Transistoren (104) die Durchführung einer Implantierung von Dotierstoffen in den Halbleiter (118) umfasst, der die aktiven Bereiche (122) jedes der ersten Transistoren (104) bilden soll, mit einer Dosis zwischen etwa 5.10¹¹ und 5.10¹² at/cm² und einer Energie von etwa 0,5 bis 20 keV.

11. Verfahren zur Identifizierung einer elektronischen Vorrichtung (100), umfassend eine Vielzahl von MOSFET-Transistoren (102) vom Typ FD-SOI, von denen erste Transistoren (104) desselben Designs derart beschaffen sind, dass jeder erste Transistor (104) einen Kanal (130) mit einer Dicke von weniger als 20 nm aufweist und wobei eine Konzentration von Dotierstoffen desselben Typs wie die in Source und Drain des ersten Transistors (104) vorhandenen höher ist als die im Kanal jedes der anderen Transistoren der Mehrzahl von Transistoren (102) desselben Leitfähigkeitstyps wie der erste Transistor (104), und derart, dass ein Gate (124) jedes der ersten Transistoren (104) eine Länge von kleiner gleich 20 nm aufweist, umfassend wenigstens die folgenden Schritte:
- Lesen von Strömen, die in den ersten identisch polarisierten Transistoren fließen;
- paarweiser Vergleich der Werte der genannten Ströme, wobei die Ergebnisse dieser Vergleiche eine eindeutige Kennung vom Typ PUF der elektronischen Vorrichtung bilden.

12. Verfahren zur Identifizierung einer elektronischen Vorrichtung (100), umfassend eine Vielzahl von MOSFET-Transistoren (102) vom Typ FD-SOI, wobei erste Transistoren (104) desselben Designs derart beschaffen sind, dass jeder erste Transistor (104) einen Kanal (130) mit einer Dicke von weniger als 20 nm aufweist und wobei eine Konzentration von Dotierstoffen desselben Typs wie die in Source und Drain des ersten Transistors (104) vorhandenen höher ist als die im Kanal jedes der anderen Transistoren der Mehrzahl von Transistoren (102) desselben Leitfähigkeitstyps wie der erste Transistor (104), und derart, dass ein Gate (124) jedes der ersten Transistoren (104) eine Länge von kleiner gleich 20 nm aufweist, wobei die ersten Transistoren (104) eine Vielzahl von SRAM-Speicherzellen (134) bilden, umfassend wenigstens einen Schritt des Lesens eines Anfangsspeicherzustands jeder der von den ersten Transistoren (104) gebildeten SRAM-Speicherzellen (134), wobei die Anfangsspeicherzustände der SRAM-Speicherzellen (134) zusammen eine eindeutige Kennung vom Typ PUF der elektronischen Vorrichtung (100) bilden.

## Claims

1. Electronic device (100) comprising at least:
- a plurality of MOSFET FD-SOI type transistors (102) among which first transistors (104) of a same design are such that each first transistor (104) comprises a channel (130) having a thickness less than 20 nm and in which a concentration of the same type of dopants as those present in the source and drain of said first transistor (104) is greater than the concentration in the channel of each of the other transistors in said plurality of transistors (102) of the same type of conductivity as said first transistor (104); and
- an identification circuit (106) configured to determine a unique identifier of PUF type of the electronic device (100) starting from at least one intrinsic electrical characteristic of each of the first transistors (104), the value of which depends at least partly on the conductance of said first transistor (104).
and in which the length of a gate (124) of each of the first transistors (104) is less than or equal to about 20 nm.

2. Electronic device (100) according to claim 1, in which the identification circuit (106) is configured to compare values of currents circulating in the first identically biased transistors (104) two by two, the results of these comparisons being used to form the unique identifier of the electronic device (100).

3. Electronic device (100) according to claim 2, in which the identification circuit (106) comprises at least:
- a multiplexer (108) comprising several inputs, each connected to the drain or the source of one of the first transistors (104), and two outputs; and
- a comparator (110) comprising two inputs connected to two outputs of the multiplexer (108), configured to output a signal with a value that varies depending on the result of the comparison between the values of currents applied on comparator (110) inputs.

4. Electronic device (100) according to claim 1, in which:
- the first transistors (104) form several SRAM memory cells (134), and
- the identification circuit (106) is configured to read an initial memory state of each of the SRAM memory cells (134) formed by the first transistors (104), the initial memory states of said SRAM memory cells (134) together forming the unique identifier of the electronic device (100).

5. Electronic device (100) according to one of previous claims, in which said concentration of dopants of the same type as those present in the source and drain of said first transistor (104) is between about 5.10¹⁷ and 8.10¹⁸ at/cm³.

6. Electronic device (100) according to one of previous claims, in which the length of the gate (124) of each first transistor (104) is less than the length of the gate of each of the other transistors (102).

7. Electronic device (100) according to one of previous claims, in which the thickness of the active zone (122) of each of the first transistors (104) is higher than the thickness of the active zone of each of the other transistors (102).

8. Electronic circuit (100) according to claim 7, in which the thickness of said active zone (122) of each first transistor (104) is between 5 nm and 20 nm.

9. Method of making an electronic device (100), comprising at least the following steps:
- fabricate a plurality of MOSFET FD-SOI type transistors (102) among which first transistors (104) of a same design are such that each first transistor (104) comprises a channel (130) having a thickness less than 20 nm and in which a concentration of the same type of dopants as those present in the source and drain of said first transistor (104) is greater than the concentration in the channel of each of the other transistors in said plurality of transistors (102) of the same type of conductivity as said first transistor (104), and such that the length of a gate (124) of each of the first transistors (104) is less than or equal to about 20 nm;
- fabricate an identification circuit (106) configured to determine a unique identifier of PUF type of the electronic device (100) starting from at least one intrinsic electrical characteristic of each of the first transistors (104), the value of which depends at least partly on the conductance of said first transistor (104).

10. Method according to claim 9, in which fabrication of the first transistors (104) includes the use of an implantation of dopants in the semiconductor (118) to form active zones (122) in each of the first transistors (104), with a dose of between about 5.10¹¹ and 5.10¹² at/cm² and an energy between about 0.5 and 20 keV.

11. Method of identifying an electronic device (100) comprising a plurality of MOSFET FD-SOI type transistors (102) among which first transistors (104) of a same design are such that each first transistor (104) comprises a channel (130) having a thickness less than 20 nm and in which a concentration of the same type of dopants as those present in the source and drain of said first transistor (104) is greater than the concentration in the channel of each of the other transistors in said plurality of transistors (102) of the same type of conductivity as said first transistor (104), and such that the length of a gate (124) of each first transistor (104) is less than or equal to about 20 nm, comprising at least the following steps:
- read the currents circulating in the identically biased first transistors;
- compare said current values two by two, the results of these comparisons forming an unique identifier of PUF type of the electronic device (100).

12. Method of identifying an electronic device (100) comprising plurality of MOSFET FD-SOI type transistors (102) among which first transistors (104) of same design are such that each first transistor (104) comprises a channel (130) having a thickness less than 20 nm and in which a concentration of the same type of dopants as those present in the source and drain of said first transistor (104) is greater than the concentration in the channel of each of the other transistors in said plurality of transistors (102) of the same type of conductivity as said first transistor (104), and such that the length of a gate (124) of each first transistor is less than or equal to about 20 nm, the first transistors (104) forming several SRAM memory cells (134),
comprising at least one step to read an initial memory state of each of the SRAM memory cells (134) formed by the first transistors (104), the initial memory states of said SRAM memory cells (134) together forming the unique identifier of PUF type of the electronic device (100).
